# EUROPEAN PATENT APPLICATION

(11) **EP 4 343 883 A1**
(43) Date of publication of application: **27.03.2024**
(21) Application number: 22804335.2
(22) Date of filing: 14.03.2022
(51) Int. Cl.: H01M 4/136, H01M 4/36, H01M 4/58, H01M 4/62, H01M 10/0562

(54) **COMPOSITE POSITIVE ELECTRODE ACTIVE MATEIRAL, POSITIVE ELECTRODE MATEIRAL AND BATTERY**

(30) Priority: 20.05.2021 JP 2021085587
(71) Applicant: Panasonic Intellectual Property Management Co., Ltd., Kadoma-shi, Osaka 571-0057 (JP)
(72) Inventor: FUJINOKI, Norihito, Tokyo 103-0022 (JP)
(74) Representative: Grünecker Patent- und Rechtsanwälte PartG mbB
(86) International application number: PCT/JP2022/011260
(87) International publication number: WO 2022/244416

(57) **Abstract**

According to the present disclosure, a composite positive electrode active material 100 includes a positive electrode active material 101 and a coating layer 102 coating at least a portion of a surface of the positive electrode active material 101. The coating layer 102 contains a first coating material and a second coating material. The first coating material is a fluoride solid electrolyte, and the second coating material is a material that reacts with at least one selected from the group consisting of water and hydrogen fluoride, to form at least one selected from the group consisting of lithium oxide and lithium fluoride.

## Description

### Technical Field

The present disclosure relates to a composite positive electrode active material, a positive electrode material, and a battery.

### Background Art

Patent Literature 1 discloses an all-solid-state lithium battery including a positive electrode active material coated with a sulfide solid electrolyte.

Patent Literature 2 discloses a positive electrode material that includes a positive electrode active material coated with a halide solid electrolyte and includes a solid electrolyte. The halide solid electrolyte contains lithium and yttrium and contains chlorine and/or bromine.

### Citation List

### Patent Literature

PTL 1: International Publication No. 2019/135322
PTL 2: International Publication No. 2019/146236

### Summary of Invention

The present disclosure provides a technology for inhibiting an increase in an output resistance of a battery associated with the application of heat.

The present disclosure provides a composite positive electrode active material including a positive electrode active material and a coating layer coating at least a portion of a surface of the positive electrode active material. The coating layer contains a first coating material and a second coating material. The first coating material contains a fluoride solid electrolyte. The second coating material is a material that reacts with at least one selected from the group consisting of water and hydrogen fluoride, to form at least one selected from the group consisting of lithium oxide and lithium fluoride.

With the present disclosure, an increase in an output resistance of a battery associated with the application of heat can be inhibited.

### Brief Description of Drawings

[Fig. 1] Fig. 1 is a cross-sectional view illustrating a schematic configuration of a composite positive electrode active material of a first embodiment.
[Fig. 2] Fig. 2 is a diagram demonstrating a function and effect of the composite positive electrode active material illustrated in Fig. 1.
[Fig. 3] Fig. 3 is a cross-sectional view illustrating a schematic configuration of a positive electrode material of a second embodiment.
[Fig. 4] Fig. 4 is a cross-sectional view illustrating a schematic configuration of a battery of a third embodiment.

### Description of Embodiments

Embodiments of the present disclosure will be described below with reference to the drawings.

The descriptions below each describe a generic or specific example. The numerical values, compositions, shapes, film thicknesses, electrical properties, structures of secondary batteries, electrode materials, and the like that are described below are merely illustrative and are not intended to limit the present disclosure. In addition, constituent elements not described in the independent claims, which represent the most generic concept, are optional constituent elements.

### (Underlying Knowledge Forming Basis of the Present Disclosure)

Patent Literature 1 discloses that a positive electrode active material is coated with a sulfide solid electrolyte. Sulfide solid electrolytes are materials having high ionic conductivity but present a problem associated with oxidation resistance.

Patent Literature 2 discloses that a halide solid electrolyte containing chlorine and/or bromine is used. The present inventor diligently conducted studies and discovered that in instances where a halide solid electrolyte containing chlorine and/or bromine is present in a positive electrode material, the halide solid electrolyte undergoes oxidative decomposition during the charging of a battery, and as a result, charge-discharge efficiency of the battery decreases.

Specifically, in instances where a solid electrolyte containing chlorine or bromine is used in combination with a positive electrode active material having an average potential versus Li of 3.7 V or more, the solid electrolyte is decomposed by an oxidation reaction during charging, and the oxidative decomposition product can act as a resistive layer. As referred to herein, the "oxidation reaction" means not only a typical charge reaction that draws lithium and electrons from the positive electrode active material present in the positive electrode material but also a side reaction that draws electrons from the solid electrolyte, which is in contact with the positive electrode active material. Presumably, as a result of the oxidation reaction, a resistive layer made of the oxidative decomposition product, which has low lithium ion conductivity, is formed between the positive electrode active material and the solid electrolyte, and the resistive layer acts as a high interfacial resistance.

The present inventor conducted studies on technologies for inhibiting the formation of the high-resistance layer between the positive electrode active material and the solid electrolyte. As a result of the studies, it was found that a battery that uses a positive electrode active material coated with a fluoride solid electrolyte exhibits excellent oxidation resistance, which inhibits an increase in an internal resistance of the battery that may occur during charging. Details of the mechanism are not clear and are inferred to be as follows. Fluorine has the highest electronegativity among halogen elements and is, therefore, strongly bonded to a cation present in a fluoride solid electrolyte. As a result, the oxidation reaction of fluorine, that is, a side reaction that draws electrons from fluorine, is unlikely to proceed. Thus, fluoride solid electrolytes exhibit excellent oxidation resistance.

Furthermore, the present inventor studied a thermal stability of the positive electrode active material coated with a fluoride solid electrolyte. As a result of the studies, the following problem was discovered: in instances where the positive electrode active material experienced a thermal history at 100°C or greater, the output resistance of a battery during discharging increased. Details of the mechanism are not clear and are inferred to be as follows. When the positive electrode active material experiences a thermal history, water vapor is formed from a portion of water, a hydrate, and a hydroxide present in the positive electrode active material. When the formed water vapor reacts with the fluoride solid electrolyte, hydrogen fluoride is formed. Furthermore, when the hydrogen fluoride reacts with the positive electrode active material, water is re-formed. Repeated occurrences of these reactions result in the formation of a resistive layer at an interface between the positive electrode active material and the fluoride solid electrolyte.

The present inventor diligently conducted studies based on the finding described above and discovered that coating the positive electrode active material with a specific material can inhibit an increase in the output resistance of a battery associated with the application of heat.

### (Overview of Aspects of the Present Disclosure)

According to a first aspect of the present disclosure, a composite positive electrode active material includes
a positive electrode active material; and
a coating layer coating at least a portion of a surface of the positive electrode active material, in which
the coating layer contains a first coating material and a second coating material,
the first coating material is a fluoride solid electrolyte, and
the second coating material is a material that reacts with at least one selected from the group consisting of water and hydrogen fluoride, to form at least one selected from the group consisting of lithium oxide and lithium fluoride.

According to a second aspect of the present disclosure, a composite positive electrode active material includes
a positive electrode active material; and
a coating layer coating at least a portion of a surface of the positive electrode active material, in which
the coating layer contains Li, Ti, M, P, O, and F, where M is at least one selected from the group consisting of Ca, Mg, Al, Y, and Zr.

The composite positive electrode active materials of the present disclosure can inhibit an increase in an output resistance of a battery associated with the application of heat.

In a third aspect of the present disclosure, the composite positive electrode active material according to the second aspect may be one in which, for example, the coating layer contains a first coating material and a second coating material, the first coating material contains Li, Ti, M, and F, and the second coating material contains Li, P, and O. With this configuration, a reaction between a coating material and water and a reaction between the coating material and hydrogen fluoride can be effectively inhibited.

In a fourth aspect of the present disclosure, the composite positive electrode active material according to the first or third aspect may be one in which, for example, the first coating material is represented by Formula 1, shown below. In Formula 1, α, β, and γ satisfy α + 4β + 3γ = 6 and γ > 0. With this configuration, ionic conductivity of the coating material can be improved.

Li_{α}Ti_{β}M_{γ}F₆ Formula 1

In a fifth aspect of the present disclosure, the composite positive electrode active material according to any one of the second to fourth aspects may be one in which, for example, M is Al. With this configuration, the ionic conductivity of the coating material can be improved.

In a sixth aspect of the present disclosure, the composite positive electrode active material according to the fourth aspect may be one in which, for example, γ satisfies 0.5 ≤ γ < 1. With this configuration, the ionic conductivity of the coating material can be further improved.

In a seventh aspect of the present disclosure, the composite positive electrode active material according to the fourth or sixth aspect may be one in which, for example, α, β, and γ satisfy α = 2.7, β = 0.3, and γ = 0.7. With this configuration, the ionic conductivity of the coating material can be further improved.

In an eighth aspect of the present disclosure, the composite positive electrode active material according to the first, third, fourth, sixth, or seventh aspect may be one in which, for example, the second coating material contains lithium phosphate. Li₃PO₄ reacts with water and with hydrogen fluoride, to form lithium oxide and lithium fluoride to stop a continuous reaction.

In a ninth aspect of the present disclosure, the composite positive electrode active material according to the first, third, fourth, sixth, seventh, or eighth aspect may be one in which, for example, a ratio of a volume of the second coating material to a volume of the first coating material is within a range of greater than or equal to 2% and less than 100%. In the instance where the ratio is appropriately adjusted, a continuous reaction mediated by the positive electrode active material, the fluoride solid electrolyte, water, and hydrogen fluoride can be inhibited, and in addition, the ionic conductivity of the coating material can be ensured.

In a tenth aspect of the present disclosure, the composite positive electrode active material according to the ninth aspect may be one in which, for example, the ratio is within a range of greater than or equal to 2% and less than or equal to 50%. With this configuration, an increase in the output resistance of a battery can be further inhibited.

In an eleventh aspect of the present disclosure, the composite positive electrode active material according to any one of the first to tenth aspects may be one in which, for example, a ratio of a volume of the coating layer to a volume of the positive electrode active material is within a range of greater than or equal to 1% and less than or equal to 10%. In the instance where the ratio is appropriately adjusted, the amount of the coating material that coats the surface of the positive electrode active material is appropriate.

In a twelfth aspect of the present disclosure, the composite positive electrode active material according to any one of the first to eleventh aspects may be one in which, for example, the positive electrode active material contains lithium nickel cobalt aluminum oxide. With this configuration, an energy density of a battery can be increased.

According to a thirteenth aspect of the present disclosure, a positive electrode material includes
the composite positive electrode active material according to any one of the first to twelfth aspects; and
a first solid electrolyte.

The composite positive electrode active material provides desired effects to the positive electrode material.

In a fourteenth aspect of the present disclosure, the positive electrode material according to the thirteenth aspect may be one in which, for example, the first solid electrolyte includes a halide solid electrolyte. Halide solid electrolytes have excellent oxidation resistance.

In a fifteenth aspect of the present disclosure, the positive electrode material according to the thirteenth or fourteenth aspect may be one in which, for example, the first solid electrolyte includes a sulfide solid electrolyte. Sulfide solid electrolytes have excellent ionic conductivity and flexibility.

According to a sixteenth aspect of the present disclosure, a battery includes
a positive electrode including the positive electrode material according to any one of the thirteenth to fifteenth aspects;
a negative electrode; and
an electrolyte layer disposed between the positive electrode and the negative electrode.

Since the positive electrode material includes a composite positive electrode active material of the present disclosure, desired effects are provided to the battery.

In a seventeenth aspect of the present disclosure, the battery according to the sixteenth aspect may be one in which, for example, the electrolyte layer contains a second solid electrolyte, and the second solid electrolyte includes a solid electrolyte having a composition that is the same as the composition of a solid electrolyte that is present in the first solid electrolyte. With this configuration, power characteristics of the battery can be further improved.

In an eighteenth aspect of the present disclosure, the battery according to the sixteenth aspect may be one in which, for example, the electrolyte layer contains a second solid electrolyte, and the second solid electrolyte includes a halide solid electrolyte having a composition that is different from the composition of a solid electrolyte that is present in the first solid electrolyte. With this configuration, power characteristics of the battery can be further improved.

In a nineteenth aspect of the present disclosure, the battery according to the sixteenth aspect may be one in which, for example, the electrolyte layer contains a second solid electrolyte, and the second solid electrolyte includes a sulfide solid electrolyte. In the instance where a sulfide solid electrolyte, which has excellent reduction stability, is present in the electrolyte layer, it is possible to use a low-potential negative electrode material, such as graphite or lithium metal, in the negative electrode.

According to a twentieth aspect of the present disclosure, a method for producing the composite positive electrode active material according to any one of the first to twelfth aspects is provided,
the method includes processing a mixture with a dry particle-composing method, the mixture including the positive electrode active material and a material that forms the coating layer, and
the dry particle-composing method includes applying mechanical energy of impact, compression, and shear to the mixture.

The dry particle-composing method enables efficient production of the composite positive electrode active material of the present disclosure.

Embodiments of the present disclosure will be described below with reference to the drawings.

### (First Embodiment)

### (Composite Positive Electrode Active Material)

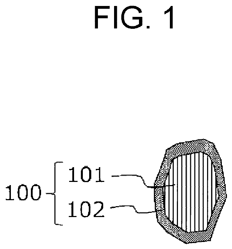

Fig. 1 is a cross-sectional view illustrating a schematic configuration of a composite positive electrode active material of a first embodiment. A composite positive electrode active material 100 includes a positive electrode active material 101 and a coating layer 102. The coating layer 102 coats at least a portion of a surface of the positive electrode active material 101. The coating layer 102 contains a first coating material and a second coating material. The first coating material is a fluoride solid electrolyte. The second coating material is a material that reacts with at least one selected from the group consisting of water and hydrogen fluoride, to form at least one selected from the group consisting of lithium oxide and lithium fluoride. In this specification, the materials that form the coating layer 102 may be referred to as a "coating material". The simpler term "coating material" includes the first coating material and the second coating material. The coating material is located on at least a portion of the surface of the positive electrode active material 101 and thus forms the coating layer 102. With this configuration, an increase in an output resistance of a battery associated with the application of heat can be inhibited.

The coating layer 102 may contain Li, Ti, M, P, O, and F. M is at least one selected from the group consisting of Ca, Mg, Al, Y, and Zr. With this configuration, the composite positive electrode active material 100 can inhibit an increase in the output resistance of a battery associated with the application of heat.

In the present embodiment, the coating layer 102 contains the first coating material and the second coating material. The first coating material contains Li, Ti, M, and F. The second coating material contains Li, P, and O. With this configuration, a reaction between the coating material and water and a reaction between the coating material and hydrogen fluoride can be effectively inhibited. Consequently, an increase in the output resistance of a battery associated with the application of heat can be inhibited.

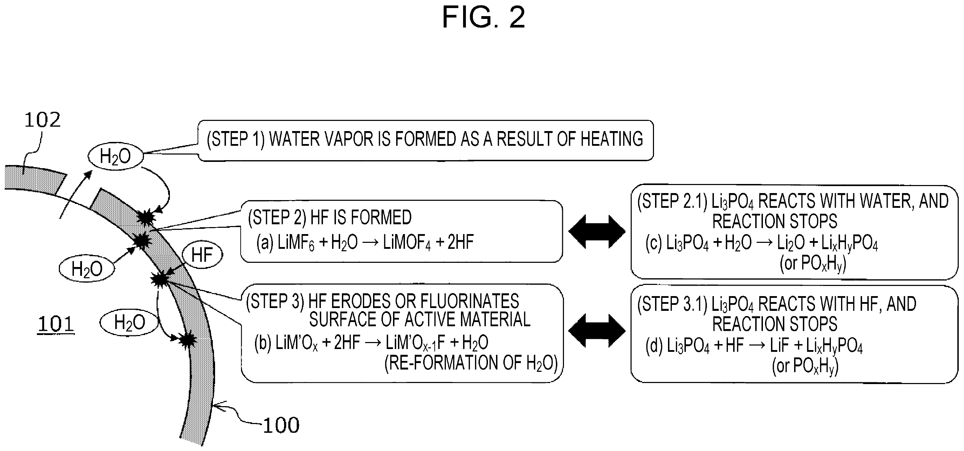

Fig. 2 is a diagram demonstrating a function and effect of the composite positive electrode active material 100. First, as illustrated in STEP 1, when heat is applied to the composite positive electrode active material 100, water vapor (H₂O) is formed from water, a hydrate, and a hydroxide present in an interior or a surface of the positive electrode active material 101. Subsequently, as illustrated by equation (a) of STEP 2, the formed water vapor reacts with a fluoride solid electrolyte (LiMF₆) present in the coating layer 102, to form hydrogen fluoride (HF). Furthermore, as illustrated by equation (b) of STEP 3, the hydrogen fluoride reacts with the positive electrode active material 101, thereby causing the surface of the positive electrode active material 101 to be eroded or fluorinated. Furthermore, the hydrogen fluoride reacts with the positive electrode active material 101 (LiM'Oₓ) to form water. Repeated occurrences of the reactions of STEP 1 to STEP 3 result in the formation of a resistive layer at an interface between the positive electrode active material 101 and the coating layer 102. Typically, the resistive layer contains an acid fluoride that contains oxygen and fluorine as anions.

Note that in the instance where the second coating material, described above, is present in the coating layer 102, a reaction of STEP 2.1 occurs in competition with the reaction of STEP 2. Specifically, as illustrated by equation (c) of STEP 2.1, a compound, such as Li₃PO₄, reacts with water to form lithium oxide (Li₂O), and, accordingly, the reaction stops. Furthermore, a reaction of STEP 3.1 occurs in competition with the reaction of STEP 3. Specifically, as illustrated by equation (d) of STEP 3.1, a compound, such as Li₃PO₄, reacts with hydrogen fluoride to form lithium fluoride (LiF), and, accordingly, the reaction stops. Consequently, the formation of a resistive layer is prevented, which inhibits an increase in the output resistance of a battery associated with the application of heat. Note that the reactions of STEP 2.1 and STEP 3.1 may produce not only lithium oxide and lithium fluoride but also, for example, lithium hydrogen phosphates (LiₓH_{y}PO₄), such as lithium dihydrogen phosphate, and phosphoric acids (POₓH_{y}).

The first coating material may be represented by Formula 1, shown below. In Formula 1, α, β, and γ satisfy α + 4β + 3γ = 6 and γ > 0. With this configuration, ionic conductivity of the coating material can be improved.

Li_{α}Ti_{β}M_{γ}F₆ Formula 1

In Formula 1, M may be Al. With this configuration, the ionic conductivity of the coating material can be improved.

In Formula 1, γ may satisfy 0.5 ≤ γ < 1. With this configuration, the ionic conductivity of the coating material can be further improved. In addition, an increase in the output resistance of a battery can be easily inhibited.

In Formula 1, α, β, and γ may satisfy α = 2.7, β = 0.3, and γ = 0.7. With this configuration, the ionic conductivity of the coating material can be further improved. In addition, an increase in the output resistance of a battery can be easily inhibited.

The second coating material is a material that reacts with at least one selected from the group consisting of water and hydrogen fluoride, to form at least one selected from the group consisting of lithium oxide and lithium fluoride. Typically, the second coating material is a lithium-containing phosphoric acid salt. Examples of the second coating material include Li₃PO₄, LiMe₂(PO₄)₃, LiFePO₄, and element-substituted derivatives thereof. Me is at least one selected from the group consisting of Ti, Zr, Ge, and Si. One or a mixture of two or more selected from these can be used as the second coating material. The second coating material can appropriately work to inhibit a continuous reaction mediated by the positive electrode active material, the fluoride solid electrolyte, water, and hydrogen fluoride. Consequently, the formation of a resistive layer at an interface between the positive electrode active material 101 and the coating layer 102 can be inhibited. Examples of the element-substituted derivatives of lithium-containing phosphoric acid salts include Li₁₊ₓTi₂₋ₓAlₓ(PO₄)₃, Li₁₊ₓAlₓZr₂₋ₓ(PO₄)₃, and Li₁₊ₓAlₓGe₂₋ₓ(PO₄)₃. Specific compositions thereof include Li_{1.3}Al_{0.3}Ti_{1.7}(PO₄)₃, Li_{1.3}Al_{0.3}Zr_{1.7}(PO₄)₃, and Li_{1.3}Al_{0.3}Ge_{1.7}(PO₄)₃, for example.

Typically, the second coating material is lithium phosphate (Li₃PO₄). As described above with reference to Fig. 2, Li₃PO₄ reacts with water and with hydrogen fluoride, to form lithium oxide and lithium fluoride to stop the continuous reaction.

The coating material is not limited to materials that exactly satisfy the formula. The coating material may be a material containing small amounts of impurities, in addition to the constituent elements shown in the formula. An amount of the impurities present in the coating layer 102, which are not the constituent elements shown in the formula, is, for example, less than or equal to 5 mass% of the total of the coating layer 102.

A ratio of the sum of masses of impurities present in the first coating material and the second coating material to the total mass of the coating layer 102 may be less than or equal to 5%, less than or equal to 3%, less than or equal to 1%, or less than or equal to 0.5%.

The coating layer 102 may consist essentially of the first coating material and the second coating material or may consist only of the first coating material and the second coating material. The expression "consist essentially of" means that other components that alter the intrinsic properties of the material or materials mentioned are excluded. The expression "consist only of" means that no additional components that are intentionally added are present while incidental impurities may be present.

The first coating material and the second coating material may be free of sulfur. In this case, formation of hydrogen sulfide gas can be prevented.

In the coating layer 102, a ratio of a volume of the second coating material to a volume of the first coating material is, for example, within a range of greater than or equal to 2% and less than 100%. In the instance where the ratio is appropriately adjusted, the continuous reaction mediated by the positive electrode active material, the fluoride solid electrolyte, water, and hydrogen fluoride can be inhibited, and in addition, the ionic conductivity of the coating material can be ensured. Consequently, the formation of a resistive layer between the positive electrode active material 101 and the coating layer 102 can be effectively inhibited, which, in turn, can inhibit an increase in the output resistance of a battery associated with the application of heat. The ratio of the volume of the second coating material to the volume of the first coating material may be less than or equal to 50%.

The ratio of the volume of the second coating material to the volume of the first coating material is an average value calculated from a large number of particles of the composite positive electrode active material 100. The ratio can be determined in the following manner. For example, an XPS spectrum of the composite positive electrode active material 100 is obtained by X-ray photoelectron spectroscopy (XPS), and elemental ratios of cations that form the coating layer 102 are calculated from the XPS spectrum. Molar ratios of the first coating material and the second coating material are each calculated from the elemental ratios. The ratio of the volume of the second coating material to the volume of the first coating material can be calculated from molar masses and densities of the first coating material and the second coating material.

A ratio of a volume of the coating layer 102 to a volume of the positive electrode active material 101 is, for example, within a range of greater than or equal to 1% and less than or equal to 10%. In the instance where the ratio is appropriately adjusted, the amount of the coating material that coats the surface of the positive electrode active material 101 is appropriate. Consequently, the formation of a resistive layer between the positive electrode active material 101 and the coating layer 102 can be effectively inhibited, which, in turn, can inhibit an increase in the output resistance of a battery. In addition, the transfer of electrons between particles of the positive electrode active material 101 can take place smoothly. This also contributes to inhibiting an increase in the output resistance of a battery.

The ratio of the volume of the coating layer 102 to the volume of the positive electrode active material 101 can be determined in the following manner. For example, in cross-sectional SEM images of the composite positive electrode active material 100 obtained with a scanning electron microscope (SEM), 20 particles are randomly selected, thereafter, the volume ratio of each of the particles is determined, and an average of the volume ratios is calculated for determination. The volume of the positive electrode active material 101 may be designated as V1, and the volume of the composite positive electrode active material 100 may be designated as V2. In this case, the ratio of the volume (V2-V1) of the coating layer 102 to the volume V1 of the positive electrode active material 101 can be determined by (V2-V1)/V1. The volume V1 of the positive electrode active material 101 can be calculated in the following manner. An area of the positive electrode active material 101 is calculated from a contour of the positive electrode active material 101 extracted from cross-sectional SEM images. A radius (an equivalent circular radius) r1, which is a radius of a circle having an area equal to the calculated area, is calculated. By assuming that the positive electrode active material 101 is a sphere having the equivalent circular radius r1, the volume V1 of the positive electrode active material 101 can be calculated from the equivalent circular radius r1. The volume of the coating layer 102 can be calculated as a value (V2-V1) obtained by subtracting the volume V1 of the positive electrode active material 101 from the volume V2 of the composite positive electrode active material 100. The volume V2 of the composite positive electrode active material 100 can be calculated in the following manner. An average thickness of the coating layer 102 is added to the equivalent circular radius r1 of the positive electrode active material 101 calculated from the cross-sectional SEM images. The sum is taken as an equivalent circular radius r2 of the composite positive electrode active material 100. By assuming that the composite positive electrode active material 100 is a sphere having the equivalent circular radius r2, the volume V2 of the composite positive electrode active material 100 can be calculated from the equivalent circular radius r2. The average thickness of the coating layer 102 can be determined, for example, as follows. In cross-sectional SEM images of the composite positive electrode active material 100, 20 particles are randomly selected, thereafter, a thickness of the coating layer 102 is measured at 16 randomly selected points for each of the particles, and an average of the measured values is calculated.

The coating layer 102 may be a single layer. With this configuration, the coating layer 102 can be easily formed, which can inhibit an increase in the cost of producing the composite positive electrode active material 100. Furthermore, desired effects can be uniformly achieved over the entirety of the coating layer 102.

The coating layer 102 includes a mixture of the first coating material and the second coating material. With this configuration, desired effects can be uniformly achieved over the entirety of the coating layer 102.

The coating layer 102 has a substantially uniform composition. That is, the first coating material and the second coating material are uniformly mixed with each other in the coating layer 102. With this configuration, desired effects can be uniformly achieved over the entirety of the coating layer 102.

The coating layer 102 may be formed of multiple layers. The coating layer 102 can be formed by coating the surface of the positive electrode active material 101 with the second coating material and subsequently coating it with the first coating material. That is, the coating layer 102 may include a first coating layer and a second coating layer; the first coating layer coats, with the second coating material, at least a portion of the surface of the positive electrode active material 101, and the second coating layer coats, with the first coating material, at least a portion of the surface of the positive electrode active material 101 provided with the first coating layer. When a large amount of the first coating layer made of the second coating material is located on the surface of the positive electrode active material 101, the continuous reaction mediated by the positive electrode active material, the fluoride solid electrolyte, water, and hydrogen fluoride can be efficiently inhibited. As a result, the formation of a resistive layer at an interface between the positive electrode active material 101 and the coating layer 102 can be effectively inhibited, which, in turn, can further inhibit an increase in the output resistance of a battery associated with the application of heat.

The thickness of the coating layer 102 is, for example, greater than or equal to 1 nm and less than or equal to 300 nm. The thickness of the coating layer 102 can be measured in the manner described above.

The composite positive electrode active material 100 has a shape of particles, for example. The shape of the particles of the composite positive electrode active material 100 is not particularly limited. The shape of the particles of the composite positive electrode active material 100 is a needle shape, a flake shape, a spherical shape, or an ellipsoidal shape.

### (Method for Producing Coating Material)

The first coating material can be produced, for example, in the following manner.

Raw material powders are prepared such that a compounding ratio corresponding to a desired composition can be achieved. For example, in instances where Li_{2.7}Al_{0.7}Ti_{0.3}F₆ is to be prepared, LiF, AlF₃, and TiF₄ are prepared in a molar ratio of 2.7:0.7:0.3. The values of α, β, and γ in Formula 1 can be adjusted by adjusting the raw materials, the compounding ratio, and a synthesis process.

The raw material powders are mixed together, and subsequently, the raw material powders are mixed, ground, and reacted together, with a mechanochemical milling method. Alternatively, after the raw material powders are mixed together, the raw material powders may be heat-treated in a vacuum or an inert atmosphere. The heat treatment is performed, for example, under conditions including a temperature range of 100°C to 800°C and a duration of 1 hour or more. In this manner, a first coating material having the composition described above can be prepared.

The constitution of the crystalline phase (crystal structure) of the first coating material can be determined by the adjustment of the method with which the raw material powders are reacted together and the conditions for the reaction.

The second coating material can be produced, for example, in the following manner.

Raw material powders are prepared such that a compounding ratio corresponding to a desired composition can be achieved. For example, in instances where Li₃PO₄ is to be prepared, Li₂CO₃ and NH₄H₂PO₄ are prepared in a molar ratio of 3:2.

The raw material powders are mixed together and subsequently heat-treated in air. The heat treatment is performed, for example, under conditions including a temperature range of 500°C to 900°C and a duration of 1 hour or more. In this manner, Li₃PO₄, which can serve as the second coating material, can be prepared. Alternatively, a commercial Li₃PO₄ reagent may be used.

The constitution of the crystalline phase (crystal structure) of the second coating material can be determined by the adjustment of the method with which the raw material powders are reacted together and the conditions for the reaction.

The coating material can be produced, for example, in the following manner.

The first coating material and the second coating material are prepared such that a desired volume ratio can be achieved. For example, Li_{2.7}Al_{0.7}Ti_{0.3}F₆ is used as the first coating material, and Li₃PO₄ is used as the second coating material. In instances where the ratio of the volume of the second coating material to the volume of the first coating material is to be adjusted to be 50%, Li_{2.7}Al_{0.7}Ti_{0.3}F₆ and Li₃PO₄ are to be prepared in a volume ratio of 1:1. The desired coating material can be prepared by mixing raw material powders of these materials together. The composition of the coating material can be adjusted by adjusting the volume ratio between the first coating material and the second coating material.

### (Positive Electrode Active Material)

The positive electrode active material 101 includes a material that has a property of occluding and releasing metal ions (e.g., lithium ions). Examples of the positive electrode active material 101 include lithium transition metal oxides, transition metal fluorides, polyanionic materials, fluorinated polyanionic materials, transition metal sulfides, transition metal oxysulfides, and transition metal oxynitrides. Examples of the lithium transition metal oxides include Li(Ni,Co,Al)O₂, Li(Ni,Co,Mn)O₂, and LiCoO₂. In instances where a lithium transition metal oxide is used as the positive electrode active material 101, the cost of production of the positive electrode can be reduced, and an average discharge voltage of a battery can be increased.

The positive electrode active material 101 may be lithium nickel cobalt aluminum oxide so as to increase an energy density of a battery. The positive electrode active material 101 may be Li(Ni,Co,Al)O₂.

The positive electrode active material 101 to be used may be a positive electrode active material having a lithium metal oxide-containing coating film on a surface. That is, a coating film made of a lithium metal oxide may be provided between the positive electrode active material 101 and the coating layer 102. Examples of the lithium metal oxide include LiNbO₃ (lithium niobate). In the instance where a lithium metal oxide-containing coating film is provided on the surface of the positive electrode active material 101, a side reaction, during charging, between the positive electrode active material 101 and the coating layer 102 is inhibited. Accordingly, with the configuration, the formation of a resistive layer on the surface of the positive electrode active material 101 can be further inhibited.

The positive electrode active material 101 has a shape of particles, for example. The shape of the particles of the positive electrode active material 101 is not particularly limited. The shape of the particles of the positive electrode active material 101 may be a spherical shape, an ellipsoidal shape, a flake shape, or a fiber shape.

### (Method for Producing Composite Positive Electrode Active Material)

The composite positive electrode active material 100 can be produced, for example, in the following manner.

A mixture is prepared by mixing a powder of the positive electrode active material 101 with a powder of the coating material at an appropriate ratio. The mixture is subjected to a milling process, in which mechanical energy is applied to the mixture. The milling process can be carried out with a mixer, such as a ball mill. The milling process may be performed in a dry and inert atmosphere so that oxidation of the materials can be inhibited.

The composite positive electrode active material 100 may be produced with a dry particle-composing method. A process that uses the dry particle-composing method includes stirring a mixture containing the positive electrode active material 101 and the coating material, while applying mechanical energy of impact, compression, and shear to the mixture. The dry particle-composing method enables efficient production of the composite positive electrode active material 100.

A machine that is used in a coating process is not particularly limited and may be a machine that can apply mechanical energy of impact, compression, shear, and the like to the mixture. The machine that can apply mechanical energy may be a compression-shear processing machine (particle-composing machine), such as a ball mill, Mechanofusion (manufactured by Hosokawa Micron Corporation), or Nobilta (manufactured by Hosokawa Micron Corporation). Among these, Mechanofusion and Nobilta are desirable, and Nobilta is more desirable.

Mechanofusion is a particle-composing machine that uses a dry mechanical composing technique, which involves applying high mechanical energy to several different material particles. In Mechanofusion, the raw material powders loaded between a rotating vessel and a press head are subjected to mechanical energy of compression, shear, friction, and the like, and, accordingly, the particles form a composite.

Nobilta is a particle-composing machine that uses a dry mechanical composing technique that has evolved from a particle-composing technique, to carry out the composing of nanoparticles used as a raw material. The technique employed in Nobilta is a technique for producing composite particles by applying mechanical energy of impact, compression, and shear to several raw material powders.

Nobilta includes a horizontal cylindrical mixing vessel, in which a rotor is positioned with a predetermined gap between the rotor and an inner wall of the mixing vessel; with high-speed rotation of the rotor, the raw material particles are forcibly passed through the gap, and this process is repeated multiple times. Accordingly, a force of impact, compression, and shear acts on the mixture, and, consequently, composite particles of the positive electrode active material 101 and the coating material can be produced. Conditions, such as a rotation speed of the rotor, a process time, and amounts of charge, may be appropriately adjusted.

The type and the amount of substance of each of the elements present in the composite positive electrode active material 100 can be determined with a known chemical analysis method.

### (Second Embodiment)

### (Positive Electrode Material)

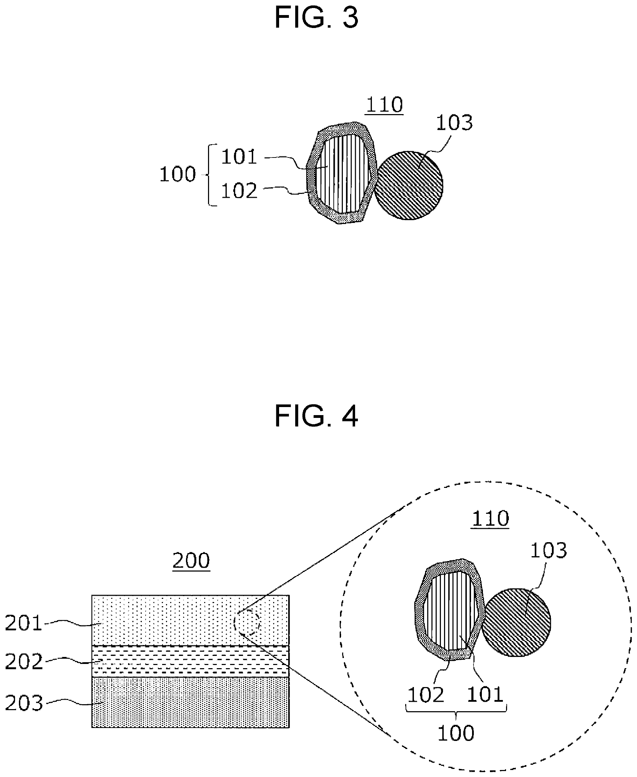

Fig. 3 is a cross-sectional view illustrating a schematic configuration of a positive electrode material of a second embodiment.

A positive electrode material 110 includes the composite positive electrode active material 100 of the first embodiment and also includes a first solid electrolyte 103. The composite positive electrode active material 100 provides the effects described in the first embodiment to the positive electrode material 110.

The first solid electrolyte 103 may include a halide solid electrolyte. Halide solid electrolytes have excellent oxidation resistance. Examples of the halide solid electrolyte include Li₃(Ca,Y,Gd)X₆, Li₂MgX₄, Li₂FeX₄, Li(Al,Ga,In)X₄, Li₃(Al,Ga,In)X₆, and LiI. X is at least one selected from the group consisting of Cl, Br, and I. In the present disclosure, regarding the elements in formulae, expressions such as "(Al,Ga,In)" mean at least one element selected from the group of the elements in the parenthesis. That is, "(Al,Ga,In)" has the same meaning as "at least one selected from the group consisting of Al, Ga, and In". The same applies to other elements. The halide solid electrolyte may be free of sulfur.

The first solid electrolyte 103 may include a sulfide solid electrolyte. Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. To any of these, LiX, Li₂O, MO_{q}, LiₚMO_{q}, and/or the like may be added. X is at least one selected from the group consisting of F, Cl, Br, and I. In the MO_{q} and LiₚMO_{q}, the element M is at least one selected from the group consisting of P, Si, Ge, B, Al, Ga, In, Fe, and Zn. In the MO_{q} and LiₚMO_{q}, p and q are each independently a natural number.

The first solid electrolyte 103 may include a sulfide solid electrolyte. Sulfide solid electrolytes have excellent ionic conductivity and flexibility. For example, the sulfide solid electrolyte may contain lithium sulfide and phosphorus sulfide. The sulfide solid electrolyte may be Li₂S-P₂S₅.

The first solid electrolyte 103 has a shape of particles, for example. The shape of the particles of the first solid electrolyte 103 is not particularly limited. The shape of the particles of the first solid electrolyte 103 may be a spherical shape, an ellipsoidal shape, a flake shape, or a fiber shape.

When the shape of the first solid electrolyte 103 is a particle shape (e.g., a spherical shape), a median diameter thereof may be less than or equal to 100 µm. When the median diameter of the first solid electrolyte 103 is less than or equal to 100 µm, the composite positive electrode active material 100 and the first solid electrolyte 103 can form a favorable state of dispersion in the positive electrode material 110. Consequently, charge-discharge characteristics of a battery are improved. The median diameter of the first solid electrolyte 103 may be less than or equal to 10 µm.

The median diameter of the first solid electrolyte 103 may be less than the median diameter of the composite positive electrode active material 100. With this configuration, the composite positive electrode active material 100 and the first solid electrolyte 103 can form a favorable state of dispersion in the positive electrode material 110.

The median diameter of the composite positive electrode active material 100 may be greater than or equal to 0.1 µm and less than or equal to 100 µm. When the median diameter of the composite positive electrode active material 100 is greater than or equal to 0.1 µm, the composite positive electrode active material 100 and the first solid electrolyte 103 can easily form a favorable state of dispersion in the positive electrode material 110. As a result, the charge-discharge characteristics of a battery are improved. When the median diameter of the composite positive electrode active material 100 is less than or equal to 100 µm, a lithium diffusion rate in the positive electrode active material 101 is sufficiently high. Accordingly, a high-power operation of a battery can be achieved.

The median diameter of the composite positive electrode active material 100 may be greater than the median diameter of the first solid electrolyte 103. In this case, the composite positive electrode active material 100 and the first solid electrolyte 103 can form a favorable state of dispersion.

In this specification, the "median diameter" is a particle diameter corresponding to a cumulative volume of 50% in a volume-based particle size distribution. The volume-based particle size distribution is measured, for example, with a laser diffraction analyzer or an image analyzer.

The first solid electrolyte 103 and the composite positive electrode active material 100 may be in contact with each other in the positive electrode material 110. In this case, the coating layer 102 and the first solid electrolyte 103 are also in contact with each other. The particles of the first solid electrolyte 103 may fill a space between the particles of the composite positive electrode active material 100.

The positive electrode material 110 may include particles of multiple first solid electrolytes 103 and particles of multiple composite positive electrode active materials 100.

In the positive electrode material 110, a content of the first solid electrolyte 103 may or may not be equal to a content of the composite positive electrode active material 100.

### (Third Embodiment)

A third embodiment will now be described. Descriptions that are the same as those in the first or second embodiment may be omitted.

Fig. 4 is a cross-sectional view illustrating a schematic configuration of a battery of the third embodiment.

A battery 200 includes a positive electrode 201, an electrolyte layer 202, and a negative electrode 203. The electrolyte layer 202 is disposed between the positive electrode 201 and the negative electrode 203.

The positive electrode 201 includes the positive electrode material 110 described in the second embodiment. Since the positive electrode material 110 includes the composite positive electrode active material 100, the effects described in the first embodiment are provided to the battery 200.

A volume of the positive electrode active material 101 is designated as v1. A total volume of the coating layer 102 and the first solid electrolyte 103 is designated as (100 - v1). The volume v1 represents the volume of the positive electrode active material 101, with a total volume of the positive electrode active material 101, the coating layer 102, and the first solid electrolyte 103 being taken as 100. When a ratio between the volume v1 and the total volume (100 - v1) is designated as v1:(100 - v1), 30 ≤ v1 ≤ 95 may be satisfied. When 30 ≤ v1 is satisfied, an energy density of the battery 200 can be easily ensured. When v1 ≤ 95 is satisfied, a high-power operation of the battery 200 can be achieved.

The positive electrode 201 may have a thickness of greater than or equal to 10 µm and less than or equal to 500 µm. When the thickness of the positive electrode 201 is greater than or equal to 10 µm, a sufficient energy density of the battery 200 is ensured. When the thickness of the positive electrode 201 is less than or equal to 500 µm, a high-power operation of the battery 200 can be achieved.

The electrolyte layer 202 is a layer containing an electrolyte. The electrolyte is, for example, a solid electrolyte. That is, the electrolyte layer 202 may be a solid electrolyte layer. The solid electrolyte that is included in the electrolyte layer 202 may hereinafter be referred to as a "second solid electrolyte".

The second solid electrolyte may be at least one selected from the group consisting of halide solid electrolytes, sulfide solid electrolytes, oxide solid electrolytes, polymer solid electrolytes, and complex hydride solid electrolytes.

The second solid electrolyte may include a solid electrolyte having a composition that is the same as the composition of the solid electrolyte that is present in the first solid electrolyte 103.

For example, the second solid electrolyte may include a halide solid electrolyte having the same composition as a halide solid electrolyte that is present in the first solid electrolyte 103. That is, the electrolyte layer 202 may include a halide solid electrolyte having a composition that is the same as the composition of a halide solid electrolyte that is present in the first solid electrolyte 103. With this configuration, the battery 200 can have further improved power characteristics.

The second solid electrolyte may include a halide solid electrolyte having a different composition than a halide solid electrolyte that is present in the first solid electrolyte 103. That is, the electrolyte layer 202 may include a halide solid electrolyte having a composition that is different from the composition of a halide solid electrolyte that is present in the first solid electrolyte 103. With this configuration, the battery 200 can have further improved power characteristics.

The second solid electrolyte may include a sulfide solid electrolyte. The second solid electrolyte may include a sulfide solid electrolyte having a composition that is the same as the composition of a sulfide solid electrolyte that is present in the first solid electrolyte 103. That is, the electrolyte layer 202 may include a sulfide solid electrolyte having a composition that is the same as the composition of a sulfide solid electrolyte that is present in the first solid electrolyte 103. In the instance where a sulfide solid electrolyte, which has excellent reduction stability, is present in the electrolyte layer 202, it is possible to use a low-potential negative electrode material, such as graphite or lithium metal, in the negative electrode 203. Consequently, the battery 200 can have an improved energy density. Furthermore, in the instance where the electrolyte layer 202 includes a sulfide solid electrolyte having a composition that is the same as the composition of a sulfide solid electrolyte that is present in the first solid electrolyte 103, the battery 200 can have further improved power characteristics.

The second solid electrolyte may include an oxide solid electrolyte. Examples of the oxide solid electrolyte include NASICON-type solid electrolytes, typified by LiTi₂(PO₄)₃ and element-substituted derivatives thereof; (LaLi)TiO₃-system perovskite-type solid electrolytes; LISICON-type solid electrolytes, typified by Li₁₄ZnGe₄O₁₆, Li₄SiO₄, LiGeO₄, and element-substituted derivatives thereof; garnet-type solid electrolytes, typified by Li₇La₃Zr₂O₁₂ and element-substituted derivatives thereof; Li₃PO₄ and N-substituted derivatives thereof; and glass or glass-ceramics including a Li-B-O compound-containing base material and one or more additional materials, in which examples of the Li-B-O compound include LiBO₂ and Li₃BO₃, and examples of the additional materials include Li₂SO₄ and Li₂CO₃.

The second solid electrolyte may include a polymer solid electrolyte. Examples of the polymer solid electrolyte include a compound of a polymeric compound and a lithium salt. The polymeric compound may have an ethylene oxide structure. Polymeric compounds having an ethylene oxide structure can contain large amounts of a lithium salt. Accordingly, the ionic conductivity can be further increased. Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone, or a mixture of two or more lithium salts selected from these may be used.

The second solid electrolyte may include a complex hydride solid electrolyte. Examples of the complex hydride solid electrolyte include LiBH₄-LiI and LiBH₄-P₂S₅.

The electrolyte layer 202 may contain the second solid electrolyte as a major component. Specifically, the second solid electrolyte may be present in the electrolyte layer 202 in a mass percentage of greater than or equal to 50% (i.e., greater than or equal to 50 mass%) relative to a total mass of the electrolyte layer 202. With this configuration, the battery 200 can have further improved power characteristics.

The second solid electrolyte may be present in the electrolyte layer 202 in a mass percentage of greater than or equal to 70% (i.e., greater than or equal to 70 mass%) relative to the total mass of the electrolyte layer 202. With this configuration, the battery 200 can have further improved power characteristics.

The electrolyte layer 202 may contain the second solid electrolyte as a major component and may further contain incidental impurities or starting materials used in the synthesis of the second solid electrolyte, one or more by-products, one or more decomposition products, and the like.

The second solid electrolyte may be present in the electrolyte layer 202 in a mass percentage of 100% (i.e., 100 mass%) relative to the total mass of the electrolyte layer 202, provided that incidental impurities are not taken into account. With this configuration, the battery 200 can have further improved power characteristics.

The electrolyte layer 202 may consist only of the second solid electrolyte.

The electrolyte layer 202 may contain only one solid electrolyte selected from the group of the above-mentioned solid electrolytes or may contain two or more solid electrolytes selected from the group of the above-mentioned solid electrolytes. The two or more solid electrolytes have different compositions. For example, the electrolyte layer 202 may contain a halide solid electrolyte and a sulfide solid electrolyte.

The electrolyte layer 202 may have a thickness of greater than or equal to 1 µm and less than or equal to 300 µm. When the thickness of the electrolyte layer 202 is greater than or equal to 1 µm, the positive electrode 201 and the negative electrode 203 can be reliably separated from each other. Furthermore, when the thickness of the electrolyte layer 202 is less than or equal to 300 µm, a high-power operation of the battery 200 can be achieved. In the instance where the thickness of the electrolyte layer 202 is appropriately adjusted, a safety and power characteristics can both be achieved.

The negative electrode 203 includes a material that has a property of occluding and releasing metal ions (e.g., lithium ions). The negative electrode 203 includes, for example, a negative electrode active material.

Examples of the negative electrode active material include metal materials, carbon materials, oxides, nitrides, tin compounds, and silicon compounds. The metal materials may be a single metal or an alloy. Examples of the metal materials include lithium metals and lithium alloys. Examples of the carbon materials include natural graphite, coke, partially graphitized carbon, carbon fibers, spherical carbon, artificial graphite, and amorphous carbon. From the standpoint of a capacity density, it is possible to use silicon (Si), tin (Sn), a silicon compound, or a tin compound.

The negative electrode 203 may include a solid electrolyte (third solid electrolyte). With this configuration, a lithium ion conductivity in the negative electrode 203 is increased, which enables a high-power operation of the battery 200. Examples of the third solid electrolyte include the materials mentioned above as examples of the second solid electrolyte.

Particles of the negative electrode active material may have a median diameter greater than the median diameter of particles of the third solid electrolyte that is present in the negative electrode 203. In this case, the negative electrode active material and the third solid electrolyte can form a favorable state of dispersion.

A volume of the negative electrode active material is designated as v2. A volume of the third solid electrolyte is designated as (100 - v2). The volume v2 represents the volume of the negative electrode active material, with a total volume of the negative electrode active material and the third solid electrolyte being taken as 100. When a ratio between the volume v2 and the volume (100 - v2) is designated as v2:(100 - v2), 30 ≤ v2 ≤ 95 may be satisfied. When 30 ≤ v2 is satisfied, an energy density of the battery 200 can be easily ensured. When v2 ≤ 95 is satisfied, a high-power operation of the battery 200 can be achieved.

The negative electrode 203 may have a thickness of greater than or equal to 10 µm and less than or equal to 500 µm. When the thickness of the negative electrode 203 is greater than or equal to 10 µm, a sufficient energy density of the battery 200 is ensured. When the thickness of the negative electrode 203 is less than or equal to 500 µm, a high-power operation of the battery 200 can be achieved.

A binding agent may be included in at least one selected from the group consisting of the positive electrode 201, the electrolyte layer 202, and the negative electrode 203, to improve adhesion between particles. The binding agent is used to improve the binding properties of the materials that form the electrodes. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polyether sulfones, hexafluoropolypropylene, styrene butadiene rubber, and carboxymethyl cellulose. The binding agent may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acids, and hexadiene. The binding agent may be a mixture of two or more selected from these materials.

A conductive additive may be included in at least one of the positive electrode 201 and the negative electrode 203 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, the costs of the battery 200 can be reduced.

The battery 200 can be configured as batteries of various shapes, and examples of the shapes include coin shapes, cylindrical shapes, prismatic shapes, sheet shapes, button shapes, flat shapes, and stack shapes.

The battery 200 can be produced in the following manner. First, a positive electrode material 110, one or more materials for forming the electrolyte layer 202, and one or more materials for forming the negative electrode 203 are provided. A multilayer body in which the positive electrode 201, the electrolyte layer 202, and the negative electrode 203 are arranged in this order is prepared with a known method. In this manner, the battery 200 can be produced.

### EXAMPLES

The present disclosure will now be described in more detail with reference to examples.

### (Samples 1 to 3)

### [Preparation of Coating Material A]

In an argon atmosphere glove box with a dew point of -60°C or less and an oxygen level of 5 ppm or less, raw material powders of LiF, AlF₃, and TiF₄ were weighed such that a molar ratio of LiF:AlF₃:TiF₄ = 2.7:0.7:0.3 was achieved. These raw material powders were mixed together in an agate mortar to form a mixture. Next, the mixture was subjected to a milling process in a planetary ball mill (P-7 model, manufactured by Fritsch) under the conditions of 12 hours and 500 rpm. In this manner, a synthesized product represented by the formula of Li_{2.7}Al_{0.7}Ti_{0.3}F₆ (hereinafter denoted as LTAF) was obtained. The synthesized product was mixed with an appropriate amount of a solvent, and the synthesized product was then subjected to a milling process in the planetary ball mill under the conditions of 20 minutes and 200 rpm. Subsequently, the solvent was removed by drying. In this manner, a powder of LTAF with an average particle diameter of 0.5 µm was obtained to be used as the first coating material.

A powder of Li₃PO₄ (hereinafter denoted as "LPO") was mixed with an appropriate amount of a solvent to form a mixture. The mixture was subjected to a milling process in the planetary ball mill under the conditions of 20 minutes and 200 rpm. Subsequently, the solvent was removed by drying. In this manner, a powder of LPO with an average particle diameter of 0.5 µm was obtained to be used as the second coating material.

Next, the LPO and the LTAF were weighed such that a volume ratio of LPO to LTAF was 1:2. These were mixed together in an agate mortar. In this manner, a coating material A was prepared.

The average particle diameter of the coating material was calculated from planar SEM images of the coating material, which were acquired with a scanning electron microscope (a 3D real surface view microscope VE-8800, manufactured by Keyence Corporation, magnification: 5000×). Specifically, in the planar SEM images of the coating material, the equivalent circular diameters of 50 randomly selected particles were determined, and an average thereof was calculated as the average particle diameter.

### [Positive Electrode Active Material]

The positive electrode active material used was Li(NiCoAl)O₂ (hereinafter denoted as NCA) with an average particle diameter of 5 µm.

### [Preparation of Composite Positive Electrode Active Material]

The application of the coating material A onto the positive electrode active material was carried out in a particle-composing machine (Nobilta, NOB-MINI, manufactured by Hosokawa Micron Corporation). 49.1 g of the NCA and 0.9 g of the coating material A were added into a vessel of the NOB-MINI. The composing of the NCA and the coating material A was carried out under the conditions of a rotational speed of 6000 rpm, an operating time of 60 minutes, and a power level of 550 W to 740 W. In this manner, composite positive electrode active materials of Samples 1 to 3 were produced. A ratio of the volume of the coating material A to the volume of the positive electrode active material was 3 vol.%.

### [Heat Treatment of Composite Positive Electrode Active Material]

The composite positive electrode active materials of Samples 1 to 3 were each subjected to a heat treatment process as follows. In an argon atmosphere glove box with a dew point of -60°C or less and an oxygen level of 5 ppm or less, the powder of the composite positive electrode active material was placed into an alumina crucible. Next, the crucible was placed into an electric furnace to heat-treat the composite positive electrode active material for 1 hour. A heat treatment temperature was 100°C for Sample 1, 200°C for Sample 2, and 300°C for Sample 3. The heat-treated powders were reground in an agate mortar. In this manner, composite positive electrode active materials (heat-treated) of Samples 1 to 3 were produced.

### (Samples 4 to 6)

A coating material B was prepared in the same manner as that of Sample 1, except that the volume ratio between LPO and LTAF was changed to 1: 1.

48.8 g of the NCA and 1.2 g of the coating material B were added into a vessel of the NOB-MINI. The composing of the NCA and the coating material B was carried out under the conditions of a rotational speed of 6000 rpm, an operating time of 60 minutes, and a power level of 550 W to 740 W. In this manner, composite positive electrode active materials of Samples 4 to 6 were prepared. The ratio of the volume of the coating material B to the volume of the positive electrode active material was 4 vol.%.

The composite positive electrode active materials of Samples 4 to 6 were each subjected to a heat treatment process in the same manner as that of Samples 1 to 3. The heat treatment temperature was 100°C for Sample 4, 200°C for Sample 5, and 300°C for Sample 6. The heat-treated powders were reground in an agate mortar. In this manner, composite positive electrode active materials (heat-treated) of Samples 4 to 6 were produced.

### (Samples 7 to 9)

A coating material C was prepared in the same manner as that of Sample 1, except that the volume ratio between LPO and LTAF was changed to 2:98.

46.8 g of the NCA and 3.2 g of the coating material C were added into a vessel of the NOB-MINI. The composing of the NCA and the coating material C was carried out under the conditions of a rotational speed of 6000 rpm, an operating time of 60 minutes, and a power level of 550 W to 740 W. In this manner, composite positive electrode active materials of Samples 7 to 9 were prepared. The ratio of the volume of the coating material C to the volume of the positive electrode active material was 10 vol.%.

The composite positive electrode active materials of Samples 7 to 9 were each subjected to a heat treatment process in the same manner as that of Samples 1 to 3. The heat treatment temperature was 100°C for Sample 7, 200°C for Sample 8, and 300°C for Sample 9. The heat-treated powders were reground in an agate mortar. In this manner, composite positive electrode active materials (heat-treated) of Samples 7 to 9 were produced.

### (Samples 10 to 12)

The powder of LTAF used in Sample 1 was prepared to be used as a coating material D.

49.4 g of the NCA and 0.6 g of the coating material D were added into a vessel of the NOB-MINI. The composing of the NCA and the coating material D was carried out under the conditions of a rotational speed of 6000 rpm, an operating time of 60 minutes, and a power level of 550 W to 740 W. In this manner, composite positive electrode active materials of Samples 10 to 12 were prepared. The ratio of the volume of the coating material D to the volume of the positive electrode active material was 2 vol.%.

The composite positive electrode active materials of Samples 10 to 12 were each subjected to a heat treatment process in the same manner as that of Samples 1 to 3. The heat treatment temperature was 100°C for Sample 10, 200°C for Sample 11, and 300°C for Sample 12. The heat-treated powders were reground in an agate mortar. In this manner, composite positive electrode active materials (heat-treated) of Samples 10 to 12 were produced.

### (Samples 13 to 15)

The powder of LTAF used in Sample 1 was prepared to be used as a coating material D.

46.8 g of the NCA and 3.2 g of the coating material D were added into a vessel of the NOB-MINI. The composing of the NCA and the coating material D was carried out under the conditions of a rotational speed of 6000 rpm, an operating time of 60 minutes, and a power level of 550 W to 740 W. In this manner, composite positive electrode active materials of Samples 13 to 15 were prepared. The ratio of the volume of the coating material D to the volume of the positive electrode active material was 10 vol.%.

The composite positive electrode active materials of Samples 13 to 15 were each subjected to a heat treatment process in the same manner as that of Samples 1 to 3. The heat treatment temperature was 100°C for Sample 13, 200°C for Sample 14, and 300°C for Sample 15. The heat-treated powders were reground in an agate mortar. In this manner, composite positive electrode active materials (heat-treated) of Samples 13 to 15 were produced.

### (Sample 16)

A composite positive electrode active material of Sample 16 was prepared in the same manner as that of Sample 1, except that the heat treatment of the composite positive electrode active material was not performed.

### (Sample 17)

A composite positive electrode active material of Sample 17 was prepared in the same manner as that of Sample 4, except that the heat treatment of the composite positive electrode active material was not performed.

### (Sample 18)

A composite positive electrode active material of Sample 18 was prepared in the same manner as that of Sample 7, except that the heat treatment of the composite positive electrode active material was not performed.

### (Sample 19)

A composite positive electrode active material of Sample 19 was prepared in the same manner as that of Sample 10, except that the heat treatment of the composite positive electrode active material was not performed.

### (Sample 20)

A composite positive electrode active material of Sample 20 was prepared in the same manner as that of Sample 13, except that the heat treatment of the composite positive electrode active material was not performed.

### [Preparation of Secondary Battery]

The following process was performed on the composite positive electrode active material of Sample 1. In an argon atmosphere glove box with a dew point of -60°C or less and an oxygen level of 5 ppm or less, the composite positive electrode active material and Li₂S-P₂S₅ were weighed. The amounts of the composite positive electrode active material and the Li₂S-P₂S₅ were adjusted such that a relationship of (positive electrode active material):(coating material + Li₂S-P₂S₅) = 75:25 in terms of a volume ratio was satisfied. Furthermore, a conductive additive (VGCF-H, manufactured by Showa Denko K.K.) was weighed such that the conductive additive was present in an amount of 1.5 mass% relative to the mass of the positive electrode active material. These were mixed together in an agate mortar. In this manner, a positive electrode material of Sample 1 was prepared. "VGCF-H" is a registered trademark of Showa Denko K.K.

60 mg of Li₂S-P₂S₅ was added into an insulating cylinder and pressure-molded at a pressure of 80 MPa to form an electrolyte layer. Next, the positive electrode material of Sample 1, in an amount corresponding to 15.6 mg of the positive electrode active material, was added into the insulating cylinder, and the resultant was pressure-molded at a pressure of 720 MPa. In this manner, a positive electrode was prepared. Next, metallic Li (thickness: 200 µm) was placed on a negative electrode-side surface of the electrolyte layer. The multilayer body including the positive electrode, the electrolyte layer, and the metallic Li was pressure-molded at a pressure of 80 MPa to form a negative electrode. Next, a stainless steel current collector was placed on upper and lower sides of the multilayer body, and a current collector lead was attached to the current collector. Lastly, the insulating cylinder was sealed with an insulating ferrule so that the interior of the insulating cylinder could be isolated from the ambient environment. By performing these steps, a battery of Sample 1 was produced. Note that the insulating cylinder had an inside diameter of 9.5 mm, and the electrodes had a projected area of 0.71 cm².

Batteries of Samples 2 to 20 were prepared in the same manner as that of Sample 1.

### [Evaluation of Output Resistance]

The batteries of Samples 1 to 20 were evaluated under the following conditions.

The batteries were placed in a constant-temperature chamber at 25°C.

The batteries were charged at a constant current of 319 µA, which was a current value corresponding to a 0.1 C rate (10 hour rate), which was a rate with respect to a theoretical capacity of the batteries, and the charging was terminated at a voltage of 4.3 V (versus a Li/Li⁺ reference). Next, the batteries were charged at a constant voltage of 4.3 V, and the charging was terminated when the current value fell below 31.9 µA, which corresponded to a 0.01 C rate. After resting for 20 minutes, the batteries were discharged at a constant current of 319 µA, which was a current value corresponding to a 0.1 C rate, and the discharging was terminated at a voltage of 3.62 V (versus a Li/Li⁺ reference). Next, the batteries were discharged at a constant voltage of 3.62 V, and the discharging was terminated when the current value fell below 31.9 µA, which corresponded to a 0.01 C rate. After resting for 10 minutes, the batteries were discharged at a current value of 4.63 mA, which corresponded to a 1.45 C rate, for 10 seconds, and by using an amount of the voltage drop, the output resistance was calculated according to Ohm's law (R=ΔV/0.00463). Next, the batteries were discharged at a constant current of 319 µA, which was a current value corresponding to a 0.1 C rate, and the discharging was terminated at a voltage of 2.5 V (versus a Li/Li⁺ reference). Lastly, the batteries were discharged at a constant voltage of 2.5 V, and the discharging was terminated when the current value fell below 31.9 µA, which corresponded to a 0.01 C rate. Accordingly, the output resistance of the batteries of Samples 1 to 20 was determined. The results are shown in Table 1.

**[Table 1]**

| | Volume ratio between LPO and LTAF (LPO:LTAF) | Volume ratio of coating layer (%) | Heat treatment temperature (°C) | Output resistance (S2) |
|---|---|---|---|---|
| Sample 1 | 1:2 | 3 | 100 | 54 |
| Sample 2 | 1:2 | 3 | 200 | 58 |
| Sample 3 | 1:2 | 3 | 300 | 103 |
| Sample 4 | 1:1 | 4 | 100 | 55 |
| Sample 5 | 1:1 | 4 | 200 | 59 |
| Sample 6 | 1:1 | 4 | 300 | 95 |
| Sample 7 | 2:98 | 10 | 100 | 114 |
| Sample 8 | 2:98 | 10 | 200 | 126 |
| Sample 9 | 2:98 | 10 | 300 | 202 |
| Sample 10 | 0:100 | 2 | 100 | 58 |
| Sample 11 | 0:100 | 2 | 200 | 63 |
| Sample 12 | 0:100 | 2 | 300 | 197 |
| Sample 13 | 0:100 | 10 | 100 | 138 |
| Sample 14 | 0:100 | 10 | 200 | 143 |
| Sample 15 | 0:100 | 10 | 300 | 215 |
| Sample 16 | 1:2 | 3 | - | 50 |
| Sample 17 | 1:1 | 4 | - | 49 |
| Sample 18 | 2:98 | 10 | - | 80 |
| Sample 19 | 0:100 | 2 | - | 49 |
| Sample 20 | 0:100 | 10 | - | 93 |

Referring to Table 1, a comparison between the samples that experienced a thermal history at 100°C or greater indicates that the output resistances of the batteries of Samples 1 to 3 were lower than the output resistances of the batteries of Samples 10 to 12. The output resistances of the batteries of Samples 4 to 6 were also lower than the output resistances of the batteries of Samples 10 to 12. In particular, a comparison between the samples that experienced a thermal history at 300°C or greater indicates that the output resistances of the batteries of Samples 3 and 6 were lower than the output resistance of Sample 12. Furthermore, in the instance where samples had the same ratio of the volume of the coating layer to the volume of the positive electrode active material, the output resistances of the batteries of Samples 7 to 9 were lower than the output resistances of the batteries of Samples 13 to 15.

As shown in Table 1, the addition of LPO inhibited an increase in the output resistance of batteries associated with the application of heat. As indicated by Table 1, when the ratio of the volume of LPO, which was used as the second coating material, to the volume of LTAF, which was used as the first coating material, was within a range of greater than or equal to 2% and less than 100% (to be precise, the ratio of the volume of LPO to the total volume of LPO and LTAF was greater than or equal to 2% and less than or equal to 50%), an increase in the output resistance of batteries associated with the application of heat was sufficiently inhibited. As will be appreciated from a comparison between the results of Samples 1 to 3 and the results of Samples 4 to 6, an increase in the ratio of the volume of LPO resulted in a slight decrease in the output resistance of batteries. This indicates that even if the ratio of the volume of LPO to the volume of LTAF is less than or equal to 50%, the ratio may be sufficient. Furthermore, when the ratio of the volume of the coating layer to the volume of the positive electrode active material was within a range of greater than or equal to 1% and less than or equal to 10%, an increase in the output resistance of batteries associated with the application of heat was sufficiently inhibited.

It is speculated that in instances where a fluoride solid electrolyte (LTMF) other than LTAF is used as the first coating material, the same tendency is observed. This is because the excellent oxidation resistance of LTMFs is an effect produced primarily by fluorine.

### Industrial Applicability

The technology of the present disclosure is useful in a battery, such as an all-solid-state lithium secondary battery.

### Reference Signs List

- 100: composite positive electrode active material
- 101: positive electrode active material
- 102: coating layer
- 103: first solid electrolyte
- 110: positive electrode material
- 200: battery
- 201: positive electrode
- 202: electrolyte layer
- 203: negative electrode

## Claims

1. A composite positive electrode active material comprising:
a positive electrode active material; and
a coating layer coating at least a portion of a surface of the positive electrode active material, wherein
the coating layer contains a first coating material and a second coating material,
the first coating material is a fluoride solid electrolyte, and
the second coating material is a material that reacts with at least one selected from the group consisting of water and hydrogen fluoride, to form at least one selected from the group consisting of lithium oxide and lithium fluoride.

2. A composite positive electrode active material comprising:
a positive electrode active material; and
a coating layer coating at least a portion of a surface of the positive electrode active material, wherein
the coating layer contains Li, Ti, M, P, O, and F, where M is at least one selected from the group consisting of Ca, Mg, Al, Y, and Zr.

3. The composite positive electrode active material according to claim 2, wherein
the coating layer contains a first coating material and a second coating material,
the first coating material contains Li, Ti, M, and F, and
the second coating material contains Li, P, and O.

4. The composite positive electrode active material according to claim 1 or 3, wherein the first coating material is represented by Formula 1:
Li_{α}Ti_{β}M_{γ}F₆ Formula 1
where α, β, and γ satisfy α + 4β + 3γ = 6 and γ > 0.

5. The composite positive electrode active material according to any one of claims 2 to 4, wherein M is Al.

6. The composite positive electrode active material according to claim 4, wherein γ satisfies 0.5 ≤ γ < 1.

7. The composite positive electrode active material according to claim 4 or 6, wherein α, β, and γ satisfy α = 2.7, β = 0.3, and γ = 0.7.

8. The composite positive electrode active material according to claim 1, 3, 4, 6, or 7, wherein the second coating material contains lithium phosphate.

9. The composite positive electrode active material according to claim 1, 3, 4, 6, 7 or 8, wherein a ratio of a volume of the second coating material to a volume of the first coating material is within a range of greater than or equal to 2% and less than 100%.

10. The composite positive electrode active material according to claim 9, wherein the ratio is within a range of greater than or equal to 2% and less than or equal to 50%.

11. The composite positive electrode active material according to any one of claims 1 to 10, wherein a ratio of a volume of the coating layer to a volume of the positive electrode active material is within a range of greater than or equal to 1% and less than or equal to 10%.

12. The composite positive electrode active material according to any one of claims 1 to 11, wherein the positive electrode active material contains lithium nickel cobalt aluminum oxide.

13. A positive electrode material comprising:
the composite positive electrode active material according to any one of claims 1 to 12; and
a first solid electrolyte.

14. The positive electrode material according to claim 13, wherein the first solid electrolyte includes a halide solid electrolyte.

15. The positive electrode material according to claim 13 or 14, wherein the first solid electrolyte includes a sulfide solid electrolyte.

16. A battery comprising:
a positive electrode including the positive electrode material according to any one of claims 13 to 15;
a negative electrode; and
an electrolyte layer disposed between the positive electrode and the negative electrode.

17. The battery according to claim 16, wherein
the electrolyte layer contains a second solid electrolyte, and
the second solid electrolyte includes a solid electrolyte having a composition that is a same as the composition of a solid electrolyte that is present in the first solid electrolyte.

18. The battery according to claim 16, wherein
the electrolyte layer contains a second solid electrolyte, and
the second solid electrolyte includes a halide solid electrolyte having a composition that is different from the composition of a solid electrolyte that is present in the first solid electrolyte.

19. The battery according to claim 16, wherein
the electrolyte layer contains a second solid electrolyte, and
the second solid electrolyte includes a sulfide solid electrolyte.

20. A method for producing the composite positive electrode active material according to any one of claims 1 to 12,
the method comprising processing a mixture with a dry particle-composing method, the mixture including the positive electrode active material and a material that forms the coating layer, wherein
the dry particle-composing method includes applying mechanical energy of impact, compression, and shear to the mixture.
